# EUROPEAN PATENT APPLICATION

(11) **EP 4 375 261 A1**
(43) Date of publication of application: **29.05.2024**
(21) Application number: 22209333.8
(22) Date of filing: 24.11.2022
(51) Int. Cl.: C04B 38/00, C04B 35/52, C04B 26/28, C04B 28/00, B01J 20/20, B01J 20/30, C01B 32/312, C04B 30/02, C04B 111/28

(54) **CARBON DIOXIDE REMOVING THERMAL INSULATION MATERIAL COMPOSITION AND PRODUCTION METHOD THEREOF**

(71) Applicant: EMPA Eidgenössische Materialprüfungs- und Forschungsanstalt, 8600 Dübendorf (CH)
(72) Inventor: Wernery, Jannis, 8600 Dübendorf (CH); Baldini, Luca, 8600 Dübendorf (CH); Trobiani di Canto, Juliana Azul, 8600 Dübendorf (CH); Karakitsiou, Despoina, 8600 Dübendorf (CH); Mancebo, Francisco, 8600 Dübendorf (CH); Moore, Robert James, 8600 Dübendorf (CH)
(74) Representative: Prins Intellectual Property AG

(57) **Abstract**

The disclosed invention consists of methods for manufacturing of a carbon dioxide removing thermal insulation material composition and resulting carbon dioxide removing thermal insulation material composition, with sufficiently low thermal conductivity, which is carbon dioxide removing and therefore during its production and use, takes up more CO₂ from the atmosphere than it emits and that can store this CO₂ permanently. This is reached by using at least one pyrolysis step of thermal insulation biomass particles bound with an additional binder or a binder contained in the material or by directly compounding pyrolysed thermal insulation biomass particles, resulting in a composition shaped on the macroscopic and microscopic level.

## Description

### TECHNICAL FIELD

The present invention describes a method for manufacturing of a carbon dioxide removing thermal insulation material composition, a carbon dioxide removing thermal insulation material composition and use of pyrolysed thermal insulation biomass particles for manufacturing of carbon dioxide removing thermal insulation material composition and products.

### STATE OF THE ART

The building sector is one of the most important drivers of global climate change responsible for about 39% of the global green house gas emissions, according to Abergel et al., 2018, 2018 Global Status Report - Towards a zero-emission, efficient and resilient buildings and construction sector. International Energy Agency (IEA) for the Global Alliance for Buildings and Construction.

While for older buildings the life-time emissions are dominated by operational emissions (heating, cooling, ventilation), for modern buildings the embodied emissions - i.e. the emissions due to manufacturing of construction products, construction of the building, modernisation and replacement measures and dismantling and disposal of the building and its materials - become more and more important, reaching even 50% and more of life-time emissions Rock et al., 2020, Embodied GHG emissions of buildings - The hidden challenge for effective climate change mitigation. Applied Energy 258, 114107. https://doi.org/10.1016/j.apenergy.2019.114107.

Hence, to tackle global climate change, it is crucial to develop and use building materials with lower or even negative greenhouse impact. A carbon dioxide removing material shall be defined here as a material that, during its production and use, takes up more CO₂ from the atmosphere than it emits and that stores this CO₂ permanently.

"Permanently" can be understood here in the sense of a climate-relevant time horizon, i.e. for about 1000 to 10'000 years.

The most commonly used thermal insulation materials today - synthetic foams such as EPS, XPS or PIR/PU and mineral wool (glass wool and stone wool) - are characterised by relatively high embodied emissions. The mentioned foams emit between 26.4 and 98.9 kg of CO₂ equivalent for the insulation needed to insulate one square metre of façade at a U-value of 0.15 W/(m²·K) whereas mineral wool materials emit between 5.9 and 9.2 kg of CO₂ equivalent for this, based on the Swiss KBOB inventory 2016, taking into account those currently available materials with the best thermal performance.

Regarding thermal insulation, even materials based on sustainable raw materials, such as cellulose or wood fibre boards, are a net emitter of CO₂, which based on performance is in the same order of magnitude as the most sustainable mineral wool. At the same time, these biomass based insulation materials have a lower thermal insulation performance than synthetic foams or mineral wool.

Bio-based thermal insulation typically has thermal conductivities ≥ 40 mW/(m·K), with a few materials in the range between 36 and 39 mW/(m·K). Thus, bio-based thermal insulation is not competitive with conventional materials such as EPS or mineral wool.

Carbon dioxide removing thermal insulation materials or resulting products are not mentioned in the prior art, but biochar-containing building materials with some insulative properties could be found in the scientific and patent literature. US2022106789A1 claims a load-bearing sandwich construction with an insulating layer based on biochar in order for the structure to act as a carbon sink.

So far, no prior art document shows a thermal insulation carbon dioxide removing material composition or resulting material product forming part of sustainable buildings, that can be brought into the soil at endof-life to act as carbon sink, which stores CO₂ permanently.

### DESCRIPTION OF THE INVENTION

The object of the present invention is to form a production method to reach a thermal insulation material composition with sufficiently low thermal conductivity, which is carbon dioxide removing and therefore during its production and use, takes up more CO₂ from the atmosphere than it emits and that stores this CO₂ permanently.

The described invention has the advantages that it is based on regrowing, i.e. sustainable materials, that it is considerably better performing than prior art biomass-based materials, competitive with current conventional thermal insulation materials and most importantly that it is a carbon dioxide removing thermal insulation material, permanently removing CO₂ from the atmosphere.

In order to be able to use the thermal insulation materials later as soil enhancer at the end of the material's life time, only certain additives for binding are appropriate which are not harmful to the soil.

Furthermore, to achieve a competitive insulation performance, the biomass which is used as a raw material needs to be shaped on the macroscopic and microscopic level.

On the macroscopic level, the geometry of the biomass needs to be structured such that pores with average pore sizes smaller than about 2 to 4 mm are created, e.g., in a mechanical process.

On the microscopic level, the material needs to be made more porous in order to reduce the solid conduction, i.e. the heat conduction through the material itself, which is achieved by pyrolysis.

The problem is solved by at least partly using pyrolysed biomass resulting in macroscopic, interparticle pores determined by the binding process and the geometry of the used biomass particles and with pores on a much smaller level created inside the biomass through pyrolysis which we will call additional intraparticle pores.

Another object of the subject matter of the invention is to provide a manufacturing method of carbon dioxide removing thermal insulation material compositions and products made from them.

### BRIEF DESCRIPTION OF THE DRAWINGS

Further understanding of various aspects of the invention can be obtained by reference to the following detailed description in conjunction with the associated drawings, which are described briefly below.
- Figure 1: shows a schematic cross section of a resulting carbon dioxide removing thermal insulation material product, showing mainly rod-like pyrolysed thermal insulation particles with their intraparticle porosity bound together with a binder, thus forming the interparticle porosity.
- Figure 2a: shows a diagram of thermal conductivity vs. density of a first set of samples of a carbon dioxide removing thermal insulation material compositions based on coffee silverskin before and after a pyrolysis step, while
- Figure 2b: shows a photography of a sample of a carbon dioxide removing thermal insulation material composition, according to Figure 2a.
- Figure 3a: shows a diagram of thermal conductivity vs. density of a second set of samples, this time based on wood fibre particles before and after a pyrolysis step, while
- Figure 3b: shows a photography of a board-like sample of the pyrolysed carbon dioxide removing thermal insulation material composition, according to Figure 3a.
- Figure 4: shows the dependence of thermal conductivity and mass on the pyrolysis temperature for wood fibre samples with intrinsic binder with a density before pyrolysis of approximately 100 kg/m³. The thermal conductivity is significantly reduced for samples treated at temperatures above 150°C and below 900°C.

### DESCRIPTION

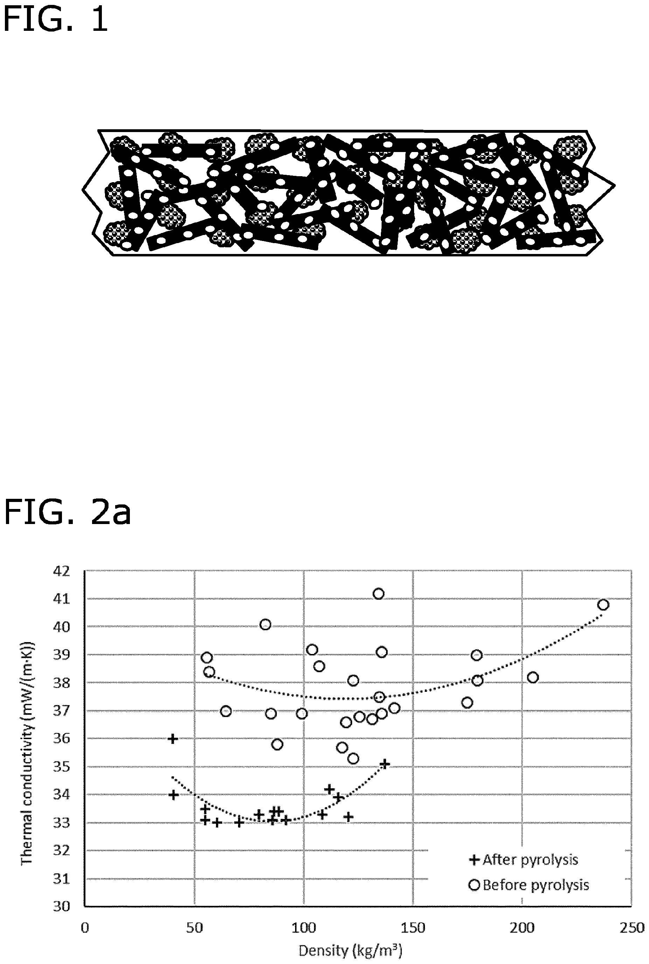

A carbon dioxide removing thermal insulation material composition is disclosed here, comprising raw biomass particles, which are pyrolysed and linked with a binder, thus forming a resulting carbon dioxide removing thermal insulation material product, for example in form of boards or cavity filling material. The open circles in Figure 1 are schematically representing the intraparticle porosity in form of a distribution of pores, which is reached after the pyrolysis step or by using pre-processed, pyrolysed thermal insulation biomass particles.

As raw material, raw biomass particles are used, showing most preferred sheet-like, 2D geometry or a rod-like, 1D geometry, meaning particles constrained in 1 and 2 spatial dimensions, respectively. These particles could also be bent in their shape. Furthermore, their average aspect ratio, i.e. the ratio of the maximum spatial extension to the maximum spatial extension in the constrained dimensions, should be at least 6. The maximum expansion of the sheets and the maximum length of the rods should be between 1 mm and 100 mm, more preferred between 2 and 40 mm, and the constrained dimensions of the sheets/rods should be on average less than 5 mm, more preferred less than 3 mm. Most preferred maximum thickness of the sheets or the rods is below 2 mm. The shaping of raw biomass particles could be performed through mechanical processes such as milling, grinding, cutting.

Also suitable are raw biomass particles having a hollow shape forming a closed pore or partially open pore with an internal dimension between 0.01 mm to 4 mm, more preferred 0.1 to 2 mm.

Used raw materials for raw biomass particles, are for example based on wheat straw, wheat bran, wheat grain, wheat husk, sunflower stalks, peanut shells, tree leaves, bamboo, reeds, typha, seagrass, corn stalks, corn cobs, corn grain, miscanthus stalks, hemp hurd, hemp fibres, cotton fibre from recycled clothing, wood fibres, wood wool, wood shavings, cardboard, paper or coffee silverskin or mixtures thereof. Particularly efficient is the use of waste materials.

We tried different binder materials for example starch, wood glue, cellulose, protein, gluten, lignin or clay and mixtures thereof. For certain materials, it is also possible to make use of binding materials contained in the biomass particles themselves, such as lignin or starch, without the addition of another binder. The binder materials should be nonharmful, to later dispose the whole material in the ground. In the soil, the biochar can serve as a soil enhancer and is stable over long periods of time.

In case starch or modified starch is used as binder, it can also be based on grains. A rough mixing ratio is one part binder to four or more parts of thermal insulation biomass particles. The binding can involve a curing step such as heating. The binding is typically performed under some form of compression, e.g. inside a mould or by moving material between rolling cylinders on a conveyor belt. However, the compression can be small and brought on only by the material's own weight.

The binder can be an intrinsic binder if the used biomass comprises such binder material like lignin or starch or can be an additionally introduced binder comprising starch, wood glue, cellulose, lignin, bioplastics, protein, gluten, geopolymers, adobe or clay or mixtures thereof.

The density of the bound biomass particles, including the binder, should be below 400 kg/m³ before pyrolysis.

### Intraparticle and interparticle porosity

By pyrolysis of raw biomass particles or when using pyrolysed raw thermal insulation biomass particles, an additional intraparticle porosity is created. I.e. via pyrolysis the density of the biomass particles, and the used binder if pyrolysis is performed after binding, is reduced via the introduction of new pores inside the biomass particles, and the binder in case of pyrolysis after binding, in addition to the pores typically already existing in the raw biomass particles. An example are the pores that exist in unpyrolysed wood with pore sizes typically below 0.05 mm. This additional intraparticle porosity of the carbon dioxide removing thermal insulation material composition is reached by the pyrolysis of raw biomass particles subsequently bound with binder, respectively pyrolysis of the carbon dioxide removing thermal insulation material composition, comprising an amount of raw biomass particles and an amount of binder. The intraparticle porosity is characterised by pores smaller than 0.1 mm and typically below 0.05 mm.

Additionally, an interparticle porosity is introduced with average pore sizes in the range between 0.01 mm to 4 mm, most preferred below 2 mm. This interparticle porosity refers to the pores created between the biomass particles joint with a binder. The pore shaping occurs due to the geometry of the particles, which when constrained geometrically with the binder, e.g. by placing in a form and compressing to a certain extend or by roll-pressing on a conveyor belt, leave gaps in between them. The compression, which in an extreme case could be brought on by only the weight of the material, needs to be such that the density of the compounded material is kept low enough, i.e. below 400 kg/m³, more preferred below 300 kg/m³, if the compounding is performed before pyrolysis and below 200 kg/m³, more preferred below 150 kg/m³, if the compounding is performed after pyrolysis.

The porosity can be determined using optical or electron microscopy and/or X-ray tomography, optionally with image processing.

The resulting carbon dioxide removing thermal insulation material composition is characterised by a thermal conductivity ≤ 40 mW/(m·K), preferably ≤ 35 mW/(m·K) and a density ≤ 200 kg/m³, more preferred ≤ 150 kg/m³. The thermal conductivity is understood here as determined according to the standard EN 12667 in the steady state with a guarded hot-plate or heat flow meter device with the materials conditioned at room temperature and 50% relative humidity. The resulting carbon dioxide removing thermal insulation material products have the same properties and both interparticle pores with sizes ≤ 4 mm and additional intraparticle pores smaller than 0.1 mm are formed in the material. The interparticle pores are formed via the geometry and the binding process. Hence, they are present in both the material composition and the products. They are macroscopic pores. The additional intraparticle pores are created through pyrolysis.

We found, that structurisation of the carbon dioxide removing thermal insulation material composition on two length scales - i.e. interparticle porosity and intraparticle porosity - is crucial as only the combination of both allows very good thermal performance. If only the natural largescale pores are realised, the result is not sufficient, comparable to the widely described and used biomass-based insulators, such as wood fibre boards, cellulose fibres, straw bales, flax fibre insulation boards, etc.

If only additional intraparticle pores are introduced through pyrolysis in a material that does not have a suitable interparticle porosity, the thermal conductivity of this material is reduced but does not come into the range of state-of-the-art conventional insulators. E.g. turning spruce wood into charcoal, a form of biochar, reduces the thermal conductivity in the longitudinal direction from about 180 mW/(m·K) to about 61 mW/(m·K).

The majority, >80%, of interparticle pores in the carbon dioxide removing thermal insulation material composition, i.e. between shaped pyrolysed thermal insulation biomass particles, have average diameters in the range between 0.01 to 4 mm, more preferred between 0.1 to 2 mm.

The resulting carbon dioxide removing thermal insulation material composition and products are comprising mostly pyrolysed biomass, i.e. > 50%, more preferred >70% by weight.

Possible resulting products are:
rigid insulation board, e.g. 500 x 1000 mm² of a thickness of 10 to 300 mm,
flexible insulation board, e.g. 500 x 1000 mm² of a thickness of 10 to 300 mm,
loose fillings for cavities, for example as in wooden elements, where the binding occurs within the cavity,
form parts of irregular shape,
pipe insulation, e.g. consisting of half pipes.

In a special embodiment the elongated dimensions of the raw or pyrolysed thermal insulation biomass particles are at least partially aligned perpendicular to the heat flow in the resulting carbon dioxide removing thermal insulation material composition, characterised by an anisotropic thermal conductivity.

### Method for manufacturing V1 = Pyrolysis after binding

A first manufacturing method comprises the steps of:
I. Providing an amount of raw biomass particles, such as wood, agricultural by-products, ideally waste-based, with a sheet-like, 2D geometry or a rod-like, 1D geometry, meaning particles constrained in 1 and 2 spatial dimensions, respectively, which can also be bent in their shape, where the average aspect ratio, i.e. the ratio of the maximum spatial extension to the maximum spatial extension in the constrained dimensions, is at least 6, and where the maximum expansion of the sheets and the maximum length of the rods are between 1 mm and 100 mm, more preferred between 2 and 40 mm, and the constrained dimensions of the sheets/rods are on average less than 5 mm, more preferred less than 3 mm, and a subsequent
II. Binding step in which such raw thermal insulation biomass particles are joint with a binder, for example clay or starch, into a cohesive material composition with a density below 400 kg/m³ for the non-pyrolysed biomass, where some form of spatial constraint is introduced in the binding process, e.g. by use of a form and compression or by pressing material, and where optionally a curing step is executed, such as heating the material with the binder and a subsequent
III. Pyrolysing step of the raw biomass material composition by heating up the raw biomass particles/binder composition to a temperature between 100°C and 1000°C, more preferred between 200°C and 800°C, most preferred between 300°C and 600°C, under a reduced oxygen atmosphere. The binder is of course also pyrolysed in this step.

### Method for manufacturing V2 = Using pyrolysed material

Alternatively, already pyrolysed material can be used in a process comprising the following steps:
I. Providing an amount of pyrolysed thermal insulation biomass particles, such as wood or agricultural by-products, ideally waste-based,
   with a sheet-like, 2D geometry or a rod-like, 1D geometry, meaning particles constrained in 1 and 2 spatial dimensions, respectively, which can also be bent in their shape, where the average aspect ratio, i.e. the ratio of the maximum spatial extension to the maximum spatial extension in the constrained dimensions, is at least 6, and where the maximum expansion of the sheets and the maximum length of the rods are between 1 mm and 100 mm, more preferred between 2 and 40 mm, and the constrained dimensions of the sheets/rods are on average less than 5 mm, more preferred less than 3 mm,
   and a subsequent
II. Binding step in which the pyrolysed thermal insulation biomass particles are joint with the intrinsic binder of the used biomass or an additionally introduced binder, for example clay or starch, into a cohesive carbon dioxide removing thermal insulation material composition with a density below 200 kg/m³, where some form of spatial constraint is introduced in the binding process, e.g. by use of a form and compression or by pressing the material, and where optionally a curing step is executed, such as heating the material with the binder.

We performed the pyrolysis by using a N2-atmosphere in a furnace and in another setup by sealing the raw biomass particles/binder composition in a container with few gas outlets and heating it in a furnace.

For the pyrolysis step, the exposure time of the biomass/binder composition to the mentioned elevated temperature should be in the range between 5 minutes and 10 hours, more preferred between 10 minutes and 5 hours, most preferred between 20 minutes and 3 hours.

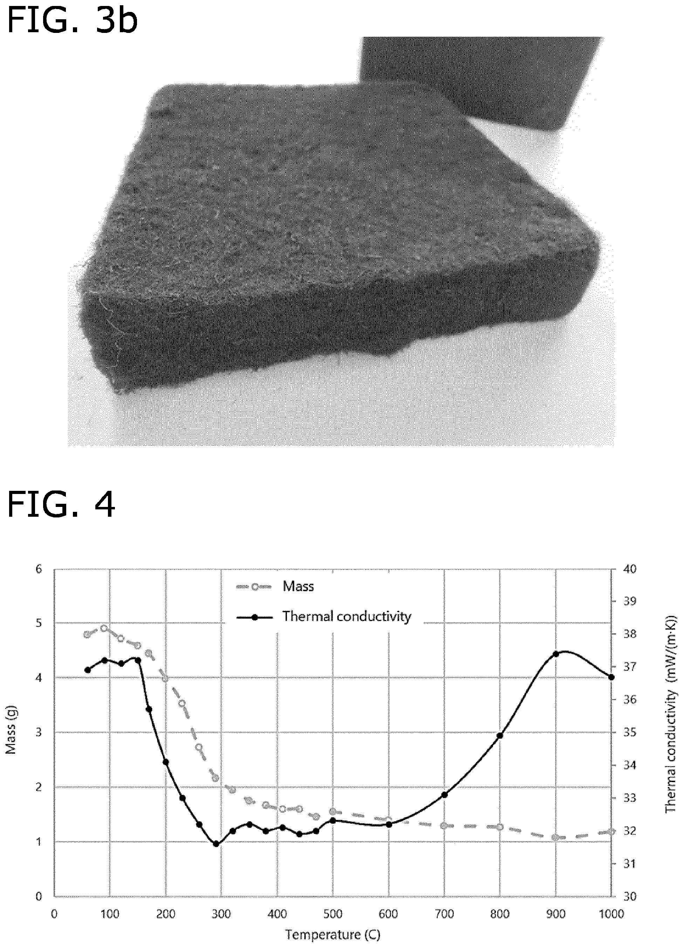

The shrinkage of the material and hence of the interparticle pores with pyrolysis needs to be taken into account for the optimisation of thermal conductivity. The pyrolysis reduces the density of the thermal insulation biomass particles/binder composition and creates smaller pores within the thermal insulation biomass particles/binder composition, the intraparticle porosity, so that solid conduction through the resulting insulating material is reduced compared to a non-pyrolysed material. The pyrolysis conditions affect both inter- and intraparticle porosity as well as the chemical make-up of the material so that the thermal conductivity of the carbon dioxide removing thermal insulation material composition after pyrolysis depends on these pyrolysis conditions, e.g. pyrolysis temperature as shown in Figure 4.

Hundreds of samples were made with different raw materials and compositions showing the principle. These were also characterised in at least one of the following properties: thermal, mechanical, fire behaviour, moisture uptake.

Materials based on biochar have a better fire performance since part of the combustion process already took place through pyrolysis. Depending on the used raw material, fire ratings of class E according to EN13501 can be reached without the use of flame retardants.

The carbon dioxide removing thermal insulation material composition and resulting carbon dioxide removing thermal insulation material products presented here are carbon dioxide removing when brought into the soil at the end of their use in the building. In order to allow the endof-life scenario of carbon storage in the soil, all constituents of the carbon dioxide removing thermal insulation material composition must be compatible with use in the soil from a technical point of view - i.e. shall not contain any harmful substances such as excess in heavy metals, fluorinated compounds etc..

Carbon dioxide removing thermal insulation material composition based on biochar most likely has a residence time of over 1000 years in the soil, thus qualifying as a carbon dioxide removing material. Each kilogram of carbon dioxide removing thermal insulation material composition contains about 2.8 kg of CO₂ equivalent, taking into account a carbon content of 75% and the atomic mass ratios of carbon and oxygen. For a biochar insulation board with a density around 100 kg/m³ and a thermal conductivity of 34 mW/(m·K), 61.9 kg of CO₂-equivalent are stored per square metre insulation with a U-value of 0.15 W/(m²·K) if the biochar is produced CO₂-neutrally.

This is almost 100 kg CO₂-equivalent less per square metre than EPS, the most commonly used building insulation material in Switzerland, taking into account both carbon storage and emission avoidance by not using EPS. Since the pyrolysis process is an energy positive process, i.e. waste heat is created, it is reasonable to assume that if the carbon dioxide removing thermal insulation material composition cannot be produced carbon-neutrally, its production footprint would at least be significantly lower than that of other materials such as wood fibre boards.

Figure 2a shows the thermal conductivity vs. density for samples based on coffee silverskin particles bound with corn starch, before and after pyrolysis. The shift in density and improvement of thermal conductivity is clearly visible after pyrolysis in the lower part of the diagram, wherein curves are fitted to both sets of measured values.

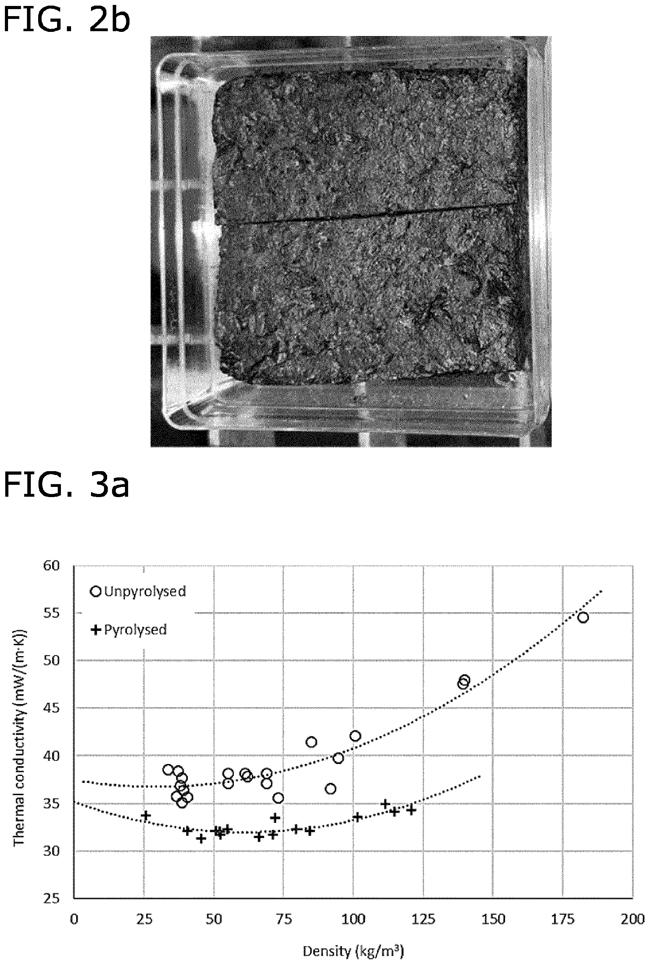

The photography in Figure 2b shows one specific example of the resulting carbon dioxide removing thermal insulation material product with pyrolysed coffee silverskin as raw biomass particles bound with starch as binder.

In Figure 3a the thermal conductivity vs. density for samples based on wood fibre particles before and after pyrolysis is shown, with fitted curves. Again using starch as binder material, the results are better after pyrolysis.

The photography of Figure 3b shows one example of the resulting carbon dioxide removing thermal insulation material product with wood fibres as raw thermal insulation biomass particles bound with starch as binder and pyrolysed subsequently.

Our invention targets lower thermal conductivity materials (≤ 40 mW/(m·K)). This is only achievable by using a suitable geometry on the larger scale (mm and sub-mm) to create the necessary interparticle porosity and introducing additional intraparticle porosity in the material itself via pyrolysis, with pores in the nm- and µm-range as described.

Also, a mixture of different biomass types can be used, e.g. wood fibres with wheat straw.

### Examples

5.0 g of spruce wood fibres, with thicknesses below 0.1 mm and lengths of around 5 mm, i.e. an aspect ratio of > 50, was placed into a square mould of inner dimensions of 60 x 60 mm² in layers and sprayed with deionised water after each layer. The material was compressed to a thickness of 12 mm and cured and dried in an oven at 150°C for 3 hours. The binding occurred due to intrinsic binding materials, such as lignin. Afterwards, the sample was pyrolysed at 350°C in a container with gas outlets in a furnace for 40 minutes. The thermal conductivity before and after pyrolysis was 36.0 and 31.9 mW/(m·K), respectively. Since this material only contains untreated wood, its use in the soil is straightforward from a legal point of view as in some countries only biochar based on untreated wood are allowed as soil additive.

6.3 g of coffee silverskin, with thickness below 0.1 mm and maximum extension of less than 10 mm, i.e. with an aspect ratio of > 100, was placed into a square mould of inner dimensions of 60 x 60 mm² in layers. A 13% solution of corn starch in deionised water was sprayed onto the coffee silverskin after each layer, resulting in a total addition of corn starch of 0.9 g (dry weight). The sample was compressed to a thickness of 12 mm and cured and dried at 180°C for 3 hours. Afterwards, the sample was pyrolysed at 350°C in a container with gas outlets in a furnace for 20 minutes. The thermal conductivity before and after pyrolysis was 38.2 and 33.2 mW/(m·K), respectively. This material reached a fire rating E according to EN13501 without the addition of any flame retardant.

6.0 g of wood wool, of thickness of about 0.2 mm, width of about 2.5 mm and length of up to 60 mm, i.e. an aspect ratio of about 24, was mixed with a solution of 3.0 g of methylcellulose in 27.0 g of water and placed in a 60 x 60 mm² mould and compressed to a thickness of 12 mm. The sample was cured and dried at 120°C for 4 hours and subsequently pyrolysed at 300°C for 1.5 hours in a tube furnace with nitrogen flushing. The thermal conductivity before and after pyrolysis was 43.3 and 37.4 mW/(m·K), respectively. For the used raw material of wood wool, in this example a thermal conductivity below 40 mW/(m·K) was only possible with the combined effects of interparticle porosity of the material itself and additional intraparticle porosity introduced via pyrolysis.

6.0 g of wood wool, of thickness of about 0.2 mm, width of about 2.5 mm and length of up to 60 mm, i.e. an aspect ratio of about 24, was mixed with a dispersion of 4.5 g of clay in 15.5 g of water and placed in a 60 x 60 mm² mould and compressed to a thickness of 12 mm. The sample was dried at 120°C for 4 hours and subsequently pyrolysed at 300°C for 1.5 hours in a tube furnace with nitrogen flushing. The thermal conductivity before and after pyrolysis was 43.1 and 36.2 mW/(m·K), respectively.

6.0 g of wood wool, of thickness of about 0.2 mm, width of about 2.5 mm and length of up to 60 mm, i.e. an aspect ratio of about 24, was mixed with a dispersion of 3.0 g of gluten in 27.0 g of water and placed in a 60 x 60 mm² mould and compressed to a thickness of 12 mm. The sample was dried and cured at 120°C for 4 hours and subsequently pyrolysed at 300°C for 1.5 hours in a tube furnace with nitrogen flushing. The thermal conductivity before and after pyrolysis was 44.3 and 35.3 mW/(m·K), respectively.

3.1 g of pyrolysed wheat straw, with thickness of about 0.2 mm, width of about 4 mm and length of about 50 mm, i.e. an aspect ratio of about 13, was placed into a square mould of inner dimensions of 60 x 60 mm² in layers. The wheat straw had been pyrolysed for 40 minutes at 350°C in a sealed container with gas outlets in a furnace. After each layer the material was sprayed with a 5% corn starch solution in deionised water, adding a total of 25.3 g of solution. The sample was compressed to a thickness of 12 mm and cured and dried at 150 °C for 3 hours. The resulting thermal conductivity was 36.8 mW/(m·K).

5.1 g of pyrolysed hemp hurd, with thickness of about 1-2 mm, width of about 3 mm and length of about 20 mm, i.e. an aspect ratio of about 7, was mixed with 14.0 g of a 5% dispersion of soy protein in deionised water, placed in a 60 x 60 mm² mould and compressed to a thickness of 12 mm. The hemp hurd had been pyrolysed for 40 minutes at 350°C in a sealed container with gas outlets in a furnace. The resulting sample was cured and dried at 150 °C for 3 hours. The thermal conductivity of the sample was 38.0 mW/(m·K).

5.1 g of pyrolysed miscanthus straw, with thickness of about 0.4 mm, width of about 2-3 mm and length of about 15 mm, i.e. an aspect ratio of about 6, was placed into a square mould of inner dimensions of 60 x 60 mm² in layers. The miscanthus straw had been pyrolysed for 40 minutes at 350°C in a sealed container with gas outlets in a furnace. After each layer the material was sprayed with a 2% solution of starch in deionised water, adding a total of 9.9 g of solution. The material was compressed to a thickness of 12 mm and cured and dried at 150 °C for 3 hours. The thermal conductivity of the resulting sample was 36.2 mW/(m·K).

Old clothing consisting of 100% cotton were shredded using an office shredder, resulting in sheet-like clothing pieces of thickness of about 0.2 mm, width of about 1-3 mm and length of about 7-30 mm, i.e. with an aspect ratio of about 10. These particles were subsequently pyrolysed for 40 minutes at 350°C in a sealed container with gas outlets in a furnace. 3.4 g of the particles were placed in layers into a square mould of inner dimensions of 60 x 60 mm² in layers. After each layer the material was sprayed with a 5% solution of starch in deionised water, adding a total of 19.0 g of solution. The material was compressed to a thickness of 12 mm and cured and dried at 150 °C for 3 hours. The thermal conductivity of the resulting sample was 37.3 mW/(m·K).

The following material constitutes a counter example as the claimed geometry restraints are not fulfilled - the material was not made from particles and thus there is no interparticle porosity - and hence a thermal conductivity smaller or equal to 40 mW/(m·K) was not reached. A block of spruce wood of approximate size 70 x 70 x 17 mm³ was pyrolysed for 120 minutes at 350°C in a sealed container with gas outlets in a furnace. The thermal conductivity of the material before and after pyrolysis was 180.5 and 61.3 mW/(m·K), respectively, with heat flow being along the longitudinal direction of the wood.

The following material constitutes another counter example where the material was made from particles, however the aspect ratio of the particles was smaller than required in the claims and hence a thermal conductivity smaller or equal to 40 mW/(m·K) was not reached. Here, a commercially available biochar made from biomass from tree pruning and landscaping green waste was used, consisting of rod-like particles with an average length of about 10 mm and an average aspect ratio of about 2.8. 6.5 g of this biochar was mixed with 3.4 g of starch dissolved in 16.5 of water. The mixture was placed into a square mould of inner dimensions of 60 x 60 mm², compressed to a thickness of 12 mm and subsequently cured and dried at 150 °C for 3 hours. The thermal conductivity of the resulting sample was 52.3 mW/(m·K).

## Claims

1. Method for manufacturing of a carbon dioxide removing thermal insulation material composition,
**characterized by the steps:**
I. Providing an amount of raw biomass particles with sheet-like or rod-like geometry, meaning particles constrained in one and two spatial dimensions, respectively, which can also be bent in their shape, where the average aspect ratio, i.e. the ratio of the maximum spatial extension to the maximum spatial extension in the constrained dimensions, is at least 6, where the maximum extension of the sheets and the maximum length of the rods are between 1 mm and 100 mm, more preferred between 2 and 40 mm, and where the constrained dimensions of the sheets/rods are on average less than 5 mm, more preferred less than 3 mm,
II. Binding the raw biomass particles into a cohesive material composition introducing geometrical constraints with an intrinsic binder of the used biomass or an additionally introduced binder, most preferred with a subsequent curing step of the binder, before
III. Pyrolysis of the raw biomass particles/binder composition at a temperature between 100°C and 1000°C, more preferred between 200°C and 800°C, most preferred between 300°C and 600°C, under a reduced oxygen atmosphere, resulting in a carbon dioxide removing thermal insulation material composition with an interparticle porosity with pores distributed over the entire material composition volume, with average cross-sections in the range between 0.01 mm to 4 mm.

2. Method for manufacturing of a carbon dioxide removing thermal insulation material composition,
**characterized by the steps:**
I. Providing an amount of pyrolysed thermal insulation biomass particles with sheet-like or rod-like geometry, meaning particles constrained in one and two spatial dimensions, respectively, which can also be bent in their shape, where the average aspect ratio, i.e. the ratio of the maximum spatial extension to the maximum spatial extension in the constrained dimensions, is at least 6, and where the maximum extension of the sheets and the maximum length of the rods are between 1 mm and 100 mm, more preferred between 2 and 40 mm, and the constrained dimensions of the sheets/rods are on average less than 5 mm, more preferred less than 3 mm,
II. Binding the pyrolysed thermal insulation biomass particles into a cohesive material composition introducing geometrical constraints with an additionally introduced binder, most preferred with a subsequent curing step of the binder.

3. Method for manufacturing of a carbon dioxide removing thermal insulation material composition according to claim 1 or 2, wherein used thermal insulation biomass particles are based on wheat straw, wheat bran, wheat grain, wheat husk, sunflower stalks, peanut shells, tree leaves, bamboo, reeds, typha, seagrass, corn stalks, corn cobs, corn grain, miscanthus stalks, hemp hurd, hemp fibres, cotton fibre from recycled clothing, wood fibres, wood wool, wood shavings, cardboard, paper or coffee silverskin or mixtures thereof, leading to a interparticle porosity of the carbon dioxide removing thermal insulation material composition with an interparticle porosity with pores distributed over the entire material composition volume, with average cross-sections in the range between 0.01 mm to 4 mm.

4. Method for manufacturing of a carbon dioxide removing thermal insulation material composition according to one of the preceding claims, wherein the binding of the thermal insulation biomass particles into a cohesive material composition with the binder by introducing geometrical constraints is achieved by use of a form, or by pressing the material on a conveyor belt using the binder.

5. Method for manufacturing of a carbon dioxide removing thermal insulation material composition according to one of the preceding claims, using an intrinsic binder of the used biomass such as lignin or starch or an additionally introduced binder comprising starch, wood glue, cellulose, lignin, tannin, bioplastics, protein, gluten, geopolymers, adobe or clay or mixtures thereof.

6. Method for manufacturing of a carbon dioxide removing thermal insulation material composition according to claim 1, wherein density of the cohesive material composition before pyrolysis, consisting of the raw biomass and the used binder, is below 400 kg/m³.

7. Method for manufacturing of a carbon dioxide removing thermal insulation material composition according to claim 2, wherein density of the cohesive material composition, consisting of the pyrolysed thermal insulation biomass particles and the binder, is below 200 kg/m³.

8. Method for manufacturing of a carbon dioxide removing thermal insulation material composition according to one of the preceding claims, wherein the shaping of raw or pyrolysed thermal insulation biomass particles is performed through mechanical processes such as milling, grinding, cutting.

9. Method for manufacturing of a carbon dioxide removing thermal insulation material composition according to one of the preceding claims, wherein the pyrolysis step is performed by using a N2-atmosphere in a furnace or in another setup by sealing the raw biomass particles/binder composition in a container with few gas outlets and heating said container in a furnace.

10. Method for manufacturing of a carbon dioxide removing thermal insulation material composition according to one of the preceding claims, wherein the exposure time of the biomass particles or the biomass/binder composition to the mentioned temperature range of 100 to 1000°C should be between 10 minutes and 10 hours, more preferred between 20 minutes and 5 hours, most preferred between 30 minutes and 3 hours.

11. Carbon dioxide removing thermal insulation material composition comprising a cohesive mixture of an amount of thermal insulation pyrolysed biomass particles and a binder, which may or may not be pyrolysed depending on the manufacturing method,
**characterized in that**
the binder was an intrinsic part of the raw, unpyrolysed biomass, such as lignin or starch, or was an additionally introduced binder comprising starch, wood glue, cellulose, lignin, tannin, bioplastics, protein, gluten, geopolymers, adobe or clay or mixtures thereof,
and the thermal insulation biomass particles are pyrolysed thermal insulation biomass particles with sheet-like or rod-like geometry, meaning particles constrained in one and two spatial dimensions, respectively, which can also be bent in their shape, where the average aspect ratio, i.e. the ratio of the maximum spatial extension to the maximum spatial extension in the constrained dimensions, is at least 6, and where the maximum expansion of the sheets and the maximum length of the rods are between 1 mm and 100 mm, more preferred between 2 and 40 mm, and the constrained dimensions of the sheets/rods are on average less than 5 mm, more preferred less than 3 mm,
based on wheat straw, wheat bran, wheat grain, wheat husk, sunflower stalks, peanut shells, tree leaves, bamboo, reeds, typha, seagrass, corn stalks, corn cobs, corn grain, miscanthus stalks, hemp hurd, hemp fibres, cotton fibre from recycled clothing, wood fibres, wood wool, wood shavings, cardboard, paper or coffee silverskin or mixtures thereof,
with densities below 200 kg/m³,
wherein an interparticle porosity of the carbon dioxide removing thermal insulation material composition with pores distributed over the entire material composition volume, with average cross-sections in the range between 0.01 mm to 4 mm exists in order to show a thermal conductivity of the thermal conductivity along the direction of heat flow of the material composition ≤ 40 mW/(m·K), measured according to EN 12667 with material conditioning at room temperature and 50% relative humidity.

12. Carbon dioxide removing thermal insulation material composition according to claim 11, wherein the mixing ratio by weight of binder to thermal insulation biomass particles is at most 1 to 4.

13. Carbon dioxide removing thermal insulation material composition according to one of the claims 11 to 12, wherein the resulting carbon dioxide removing thermal insulation material composition and products are comprising > 50%, more preferred >75% pyrolysed biomass particles by weight.

14. Carbon dioxide removing thermal insulation material composition according to one of the claims 11 to 13, wherein the elongated dimensions of the raw or pyrolysed thermal insulation biomass particles are at least partially aligned perpendicular to the heat flow in the resulting carbon dioxide removing thermal insulation material composition, showing an anisotropic thermal conductivity, where the thermal conductivity perpendicular to the heat flow is at least 1.05 times the thermal conductivity parallel to the heat flow.

15. Carbon dioxide removing thermal insulation material composition according to one of the claims 11 to 14 in the form of thermal insulation boards or form parts where the thermal conductivity is lowest perpendicular to the board's plane or parallel to the heat flow through the form part.

16. Use of pyrolysed thermal insulation biomass particles with sheet-like or rod-like geometry, meaning particles constrained in one and two spatial dimensions, respectively, which can also be bent in their shape, where the average aspect ratio, i.e. the ratio of the maximum spatial extension to the maximum spatial extension in the constrained dimensions, is at least 6, and where the maximum expansion of the sheets and the maximum length of the rods are between 1 mm and 100 mm, and the constrained dimensions of the sheets/rods are on average less than 5 mm, showing an interparticle porosity with pores, with average cross-sections in the range between 0.01 mm to 4 mm,
bound under geometric constraints, such as a form or by pressing on a conveyor belt,
with either an intrinsic binder of the used biomass or an additionally introduced binder, like starch, wood glue, cellulose, lignin, tannin, bioplastics, protein, gluten, geopolymers, adobe or clay or mixtures thereof, showing a resulting thermal conductivity along the direction of heat flow of the material composition below or equal to 40 mW/(m·K), for manufacturing of a carbon dioxide removing thermal insulation material composition and carbon dioxide removing thermal insulation material products.
